# EUROPÄISCHE PATENTANMELDUNG

(11) **EP 2 175 545 A2**
(43) Veröffentlichungstag der Anmeldung: **14.04.2010**
(21) Anmeldenummer: 09012798.6
(22) Anmeldetag: 09.10.2009
(51) Int. Cl.: H02K 5/24

(54) **Elektromotorischer Antrieb für Fenster, Türen und dergleichen**

(30) Priorität: 13.10.2008 DE 202008013570 U
(71) Anmelder: SCHÜCO International KG, 33609 Bielefeld (DE)
(72) Erfinder: Wilker, Burkhard, 32760 Detmold (DE)
(74) Vertreter: Specht, Peter

(57) **Zusammenfassung**

Elektromotorischer Antrieb (1) für Fenster, Türen und dergleichen, mit einem Getriebegehäuse (2), in dem zumindest ein Antriebsmotor (3) angeordnet ist, der mit einer nachgeschalteten Antriebseinheit (12) gekoppelt ist, die ein Drehzahlreduziergetriebe (20, 21, 22, 23) enthält, wobei zwischen dem Antriebsmotor (3) und dem Drehzahlreduziergetriebe (20, 21, 22, 23) zumindest ein das Drehmoment übertragendes und Geräusche dämpfendes oder herabsetzendes Entkopplungsglied (15) aus einem nichtmetallischen Werkstoff vorgesehen ist, und/oder, dass der Antriebsmotor (3) zumindest an einer Stirnseite, vorzugsweise an beiden Stirnseiten mit einem bzw. mit zwei in Bohrungen des Getriebegehäuses (2) einsetzten Lagern (8, 9) aus nichtmetallischen Werkstoffen versehen ist.

## Beschreibung

Die Erfindung bezieht sich auf einen elektromotorischen Antrieb für Fenster, Türen und dergleichen, mit einem Getriebegehäuse, in dem zumindest ein Antriebsmotor angeordnet ist, der mit einer nachgeschalteten Antriebseinheit gekoppelt ist, die ein Drehzahlreduziergetriebe enthält.

Der gattungsgemäße elektromotorische Antrieb ist besonders für die Verstellbewegungen eines Kipp- oder Drehkippfensters ausgelegt, welches um eine horizontale oder um eine vertikale Drehachse verschwenkbar ist. Der Antrieb kann aber auch für das Betätigen von Verriegelungselementen, wie z.B. elektromotorisch angetriebene Schließrollen und Fingerriegel, verwendet werden. Der Antriebsmotor ist mit der Antriebseinheit in geeigneter Weise antriebstechnisch gekoppelt. Über diese antriebstechnische Verbindung wird das Drehzahlreduziergetriebe bei eingeschaltetem Antriebsmotor in Betrieb gesetzt. Das Drehzahlreduziergetriebe enthält üblicherweise zur Verringerung der Drehzahl mehrere Getriebestufen. Zur Verstellung des Tür- oder Fensterflügels wirkt die letzte Stufe des Drehzahlreduziergetriebes auf ein schubsteifes bzw. teilschubfestes Antriebselement, vorzugsweise in Form einer in der Antriebstechnik allgemein bekannten Schubkette. Der elektromotorische Antrieb kann beispielsweise in dem oberen Bereich eines vertikalen Rahmenholmes des Flügelrahmens installiert werden. Die Schubkette wird abgewickelt, wodurch die Verstellbewegung des Flügels abgeleitet wird. Zum Schließen des Flügels wird diese Schubkette wieder aufgewickelt. Die Schubkette ist in geeigneter Weise mit der letzten Getriebestufe des Drehzahlreduziergetriebes gekoppelt.

Bei den in Rede stehenden elektromotorischen Antrieben wird es als Nachteil empfunden, dass insbesondere vom Antriebsmotor erzeugte Schwingungen auf das Gehäuse und eventuell auf das Profil übertragen werden, wodurch unangenehme Geräusche entstehen.

Der Erfindung liegt die Aufgabe zugrunde, einen elektromotorischen Antrieb der eingangs näher beschriebenen Art so auszulegen, dass zumindest die die Geräusche erzeugenden Schwingungen zumindest wesentlich herabgesetzt werden.

Die gestellte Aufgabe wird gelöst, indem zwischen dem Antriebsmotor und dem Drehzahlreduziergetriebe zumindest ein die Schwingungen und/oder die Geräusche dämpfendes oder herabsetzendes Entkopplungsglied aus einem nichtmetallischen Werkstoff vorgesehen ist und/oder dass der Antriebsmotor zumindest an einer Stirnseite, vorzugsweise an beiden Stirnseiten, mit einem bzw. mit zwei in Bohrungen des Getriebegehäuses eingesetzten Lagern aus nichtmetallischen Werkstoffen versehen ist.

Die Antriebsteile des elektromotorischen Antriebes sind aufgrund der auftretenden Belastungen vorzugsweise aus metallischen Werkstoffen, wie Zink-Druckguss, Stahl oder einem Buntmetall gefertigt. Aus diesen Materialien hergestellte Antriebsteile sind nicht geeignet, um durch den Antriebsmotor erzeugte Schwingungen zu verringern. Diese Schwingungen werden noch untereinander verstärkt übertragen, so dass in dem Antriebsgehäuse und in den Hohlprofilen es zu Resonanzwirkungen und somit zu erhöhten Schallwellen kommt, insbesondere, da die Hohlprofile für Fenster und Türen aus Aluminium bestehen. Da nunmehr die Antriebsbewegungen bzw. die Schwingungen der Antriebsteile zumindest in einer Verbindung nicht von metallischen Bauteilen übertragen werden, sondern durch wenigstens ein Entkopplungsglied aus einem nichtmetallischen Werkstoff, wird die Entkopplung zwischen dem Antriebsmotor, dem Getriebegehäuse und der Antriebseinheit erreicht. Sofern der Antriebsmotor an einer Stirnseite oder an beiden Stirnseiten mit jeweils einem Lager aus einem nichtmetallischen Werkstoff versehen ist, welches in eine Bohrung des Getriebegehäuses eingesetzt ist, steht das metallische Gehäuse des Antriebsmotors nicht mehr im direkten Kontakt mit dem Getriebegehäuse. Die Entkopplung und die Lager können jeweils zur Reduzierung oder Dämpfung der Schwingungen für sich allein oder auch in der Kombination eingesetzt werden. Die Entkopplung lässt sich auf verschiedene Weisen lösen.

So ist vorgesehen, dass der Abtriebszapfen des Antriebsmotors mit der Antriebseinheit über eine aus zwei Kupplungshälften bestehende Kupplung gekoppelt ist, und dass zur Übertragung des Drehmomentes zwischen den Kupplungshälften das Entkopplungsglied derart angeordnet ist, dass die Kupplungshälften über dieses Entkopplungsglied form- und/oder kraftschlüssig miteinander verbunden sind.

Eine konstruktiv einfache Lösung wird erreicht, wenn die Kupplung nach Art einer Klauenkupplung ausgebildet ist, und dass die Winkel der Lücken zwischen den ineinander greifenden Klauen größer sind als die Winkel der Klauen selbst und dass zwischen den Klauen der beiden Kupplungshälften das Entkopplungsglied angeordnet ist. Dieses Entkopplungsglied hat einen kreuzförmigen Querschnitt und ist zylindrisch ausgebildet, so dass die Kupplungshälften spielfrei miteinander verbunden sind.

Darüber hinaus ist noch vorteilhaft, dass die Kupplung elastisch wird, so dass zwar die Drehmomente übertragen werden können, jedoch die Übertragung von Schwingungen vermieden wird. Darüber hinaus wird ein sogenanntes hartes Anlaufen des Antriebes vermieden, da das Entkopplungsglied zumindest die Drehmomentspitzen abbaut, die insbesondere beim Anfahren, aber auch während des Betriebes entstehen. Darüber hinaus werden unvermeidbare Toleranzen ausgeglichen.

Die Verminderung der Schwingungen und/oder der Geräusche kann noch weiter betrieben werden, wenn der Antriebsmotor zumindest teilweise von einem Dämpfungsmantel aus einem nichtmetallischen Werkstoff umhüllt ist. Eine optimale Verminderung wird jedoch erreicht, wenn der Antriebsmotor vollständig oder nahezu vollständig von dem Dämpfungsmantel umhüllt ist, d.h. der Umfangsfläche und den beiden Stirnflächen. Die stirnseitigen Bereiche des Dämpfungsmantels könnten auch als Lager ausgebildet sein.

Die vom Antriebsmotor erzeugten Schwingungen können aber nicht nur über das Getriebegehäuse weitergegeben werden, sondern insbesondere auch über die Antriebseinheit und weiterhin noch über das Ausstellelement, beispielsweise die Schubkette.

Die der Antriebseinheit zugewandte Kupplungshälfte könnte schon als Teil der Antriebseinheit gesehen werden. Auch die von der Antriebseinheit auf das Ausstellelement übertragenen Schwingungen können noch zusätzlich gedämpft werden, wenn die Motorwelle des Antriebsmotors zur Antriebseinheit schwingungstechnisch entkoppelt ist.

Es ist ferner vorteilhaft, wenn die Kupplung mit der Antriebseinheit über eine Zwischenwelle miteinander verbunden sind. Diese Zwischenwelle ist durch mindestens ein in das Getriebegehäuse eingesetztes Lager gelagert. Vorzugsweise erfolgt die Lagerung jedoch durch zwei im Abstand zueinander angeordnete Lager. Jedes Lager ist vorzugsweise als ein Wälzlager ausgebildet.

Die nichtmetallischen Dämpfungselemente sind vorzugsweise aus elastischen Materialien, wie z.B. einem Elastomer gefertigt. Von diesen Materialien kommt bevorzugt das an sich bekannte Material Cellasto in Frage.

Anhand der beiliegenden Zeichnung wird die Erfindung noch näher erläutert.

### Es zeigt:

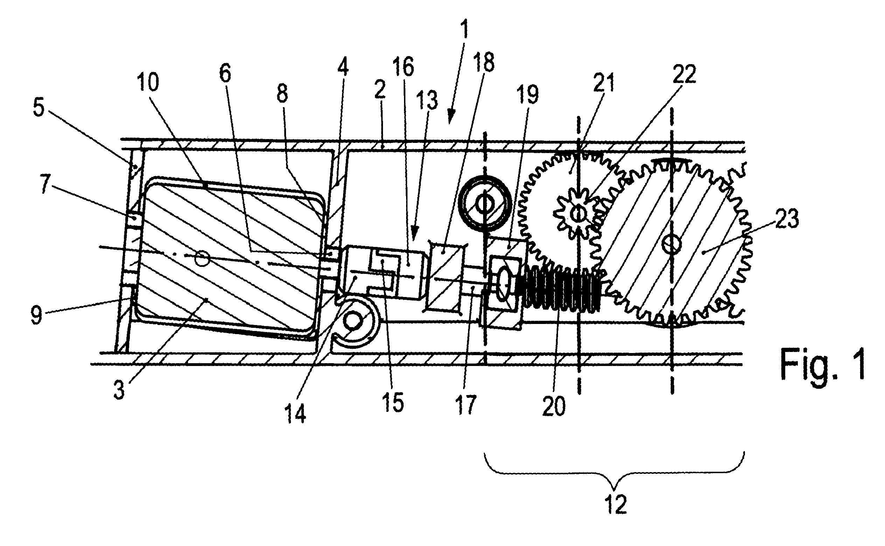

- Figur 1: einen erfindungsgemäßen elektromotorischen Antrieb in einer Teilansicht.

Der in der Figur 1 dargestellte elektromotorische Antrieb 1 ist ein bevorzugtes Ausführungsbeispiel. Die einzelnen, noch näher erläuterten Antriebsteile sind in einem Getriebegehäuse 2 montiert. In diesem Getriebegehäuse 2 ist ein Antriebsmotor 3 montiert, der stirnseitig in zwei Querstegen 4, 5 gelagert ist. Der Abtriebszapfen des Antriebsmotors 3 ist in einem Lager 6 gelagert. Ein an der gegenüberliegenden Stirnseite angesetzter oder angeformter Ansatz ist in einem weiteren Lager 7 gelagert. Beide Lager sind aus einem nichtmetallischen Werkstoff gefertigt. Wie die Figur 1 zeigt, stehen die beiden Stirnwände des Antriebsmotors 3 in einem relativ geringen Abstand zu den einander zugewandten Flächen der Querstege 4, 5. In diesen Freiräumen sind zwei weitere Lager 8, 9 eingesetzt, die ebenfalls aus einem nichtmetallischen Werkstoff bestehen.

Wie die Figur 1 ferner zeigt, ist die Umfangsfläche des Antriebsmotors 3 mit einem Dämpfungsmantel 10 umhüllt.

Der Abtriebszapfen des Antriebsmotors 3 ist mit einer Klauenkupplung 13 gekoppelt. Diese Klauenkupplung 13 besteht aus der motorseitigen Kupplungshälfte 14 und der der noch näher erläuterten Antriebseinheit 12 zugewandten Kupplungshälfte 16. Die Klauen der beiden Kupplungshälften 14, 16 sind über einen Winkelbereich angeordnet, der geringer ist als die zwischen den Klauen angeordneten Lücken. Zur formschlüssigen Verbindung der beiden Kupplungshälften 14, 16 ist ein Entkopplungsglied 15 vorgesehen, welches aus einem nichtmetallischen Material gefertigt ist. Dieses Entkopplungsglied 15 ist im Querschnitt kreuzförmig und zylindrisch gestaltet.

Die Verbindung der Klauenkupplung 13 mit der Antriebseinheit 12 erfolgt über eine Zwischenwelle 17. Die Endbereiche dieser Zwischenwelle 17 sind in Lagern 18, 19 gelagert. Diese Lager sind vorzugsweise Wälzlager. Auf das der Klauenkupplung 13 abgewandt liegende Ende der Zwischenwelle 17 ist ein Schraubengewindeelement oder eine Schnecke 20 drehfest aufgesetzt oder der Endbereich der Zwischenwelle 17 ist als Schraubengewindeelement oder Schnecke ausgebildet. Die Schraube oder die Schnecke 20 kämmt mit einem Stirn- oder Schneckenrad 21, welches mit einem eine geringere Zähnezahl aufweisenden Stirnrad 22 ausgestattet ist. Diese beiden Räder 21, 22 bilden die erste Getriebestufe der Antriebseinheit 12. Das Stirnrad 22 steht mit einem weiteren Stirnrad 23 in Eingriff, wobei die Zähnezahl größer ist als die des Rades 21 oder 22. Die Antriebseinheit 12 wird im dargestellten Ausführungsbeispiel durch das Schraubengewindeelement bzw. die Schnecke 20 und die Räder 21 bis 23 gebildet.

In nicht näher dargestellter Weise steht das Stirnrad 22 in Wirkverbindung mit einem Ausstellelement, beispielsweise mit einer Schubkette. In ebenfalls nicht näher dargestellter Weise kann der elektromotorische Antrieb 1 noch mit einem weiteren Antriebsmotor ausgestattet sein, der in Reihe zu dem dargestellten Antriebsmotor 3 montiert ist.

Die Erfindung ist nicht auf das dargestellte Ausführungsbeispiel beschränkt. Wesentlich ist, dass zumindest der Antriebsmotor 3 mit der Antriebseinheit 12 durch ein nachgiebiges Entkopplungsglied 15 verbunden ist, wobei dieses Entkopplungsglied auch das Drehmoment überträgt. Zur weiteren Schwingungsdämpfung kann der Antriebsmotor 3 in Lagern 8, 9 gehalten, sowie mit einem Dämpfungsmantel 11 umgeben sein. Darüber hinaus könnte die die Zwischenwelle bildende Antriebsverbindung zwischen der Klauenkupplung 13 und der Antriebseinheit 12 durch zwei weitere schwingungsdämpfende Lager 18, 19 gebildet sein, in denen die Zwischenwelle 17 gelagert ist.

## Patentansprüche

1. Elektromotorischer Antrieb (1) für Fenster, Türen und dergleichen, mit einem Getriebegehäuse (2), in dem zumindest ein Antriebsmotor (3) angeordnet ist, der mit einer nachgeschalteten Antriebseinheit (12) gekoppelt ist, die ein Drehzahlreduziergetriebe (20, 21, 22, 23) enthält, **dadurch gekennzeichnet, dass** zwischen dem Antriebsmotor (3) und dem Drehzahlreduziergetriebe (20, 21, 22, 23) zumindest ein das Drehmoment übertragendes und Geräusche dämpfendes oder herabsetzendes Entkopplungsglied (15) aus einem nichtmetallischen Werkstoff vorgesehen ist, und/oder, dass der Antriebsmotor (3) zumindest an einer Stirnseite, vorzugsweise an beiden Stirnseiten mit einem bzw. mit zwei in Bohrungen des Getriebegehäuses (2) einsetzten Lagern (8, 9) aus nichtmetallischen Werkstoffen versehen ist.

2. Elektromotorischer Antrieb nach Anspruch 1, **dadurch gekennzeichnet, dass** die Antriebseinheit (12) mit dem Abtriebszapfen des Antriebsmotors (3) über eine aus zwei Kupplungshälften (14, 16) bestehende Kupplung (13) gekoppelt ist, und dass zur Übertragung des Drehmomentes zwischen den Kupplungshälften (14, 16) das Entkopplungsglied (15) derart angeordnet ist, dass die Verbindungen zwischen den Kupplungshälften (14, 16) und dem Entkopplungsglied (15) formschlüssig sind.

3. Elektromotorischer Antrieb nach Anspruch 2, **dadurch gekennzeichnet, dass** die Kupplung nach Art einer Klauenkupplung (13) ausgebildet ist, und dass die Winkel der Lücken zwischen den ineinander greifenden Klauen größer sind als die Winkel der Klauen, und dass zwischen den Klauen der beiden Kupplungshälften (14, 16) das Entkopplungsglied (13) angeordnet ist.

4. Elektromotorischer Antrieb nach einem oder mehreren der vorstehenden Ansprüche, **dadurch gekennzeichnet, dass** der Antriebsmotor zumindest teilweise zur Verringerung der Schwingungen und/oder der Geräusche von einem Dämpfungsmantel (10) aus einem nichtmetallischen Werkstoff vollständig oder nahezu vollständig umhüllt ist.

5. Elektromotorischer Antrieb nach einem oder mehreren der vorstehenden Ansprüche, **dadurch gekennzeichnet, dass** die Kupplung (13) und die Antriebseinheit (12) über mindestens eine Zwischenwelle (17) miteinander gekoppelt sind, und dass zumindest ein Stirnende der Zwischenwelle (17), vorzugsweise beide Stirnenden in Lagern (18, 19) gelagert sind.

6. Elektromotorischer Antrieb nach einem oder mehreren der vorstehenden Ansprüche, **dadurch gekennzeichnet, dass** die nichtmetallischen Antriebsteile des elektromotorischen Antriebes (1) aus einem elastischen Werkstoff, wie z.B. Elastomere, vorzugsweise aus Cellasto gefertigt sind.
